# EUROPÄISCHE PATENTSCHRIFT

(11) **EP 0 790 098 B1**
(45) Veröffentlichungstag und Bekanntmachung des Hinweises auf die Patenterteilung: **02.09.1998**
(21) Anmeldenummer: 96106405.2
(22) Anmeldetag: 24.04.1996
(51) Int. Cl.: B23Q 5/38

(54) **Linearantrieb**
Linear drive
Entraînement linéaire

(43) Veröffentlichungstag der Anmeldung: 20.08.1997
(73) Patentinhaber: Wilfried Strothmann GmbH & Co KG Maschinenbau und Handhabungstechnik, 33758 Schloss Holte-Stukenbrock (DE)
(72) Erfinder: Strothmann, Wilfried, 33758 Schloss Holte-Stukenbrock (DE)
(74) Vertreter: TER MEER STEINMEISTER & PARTNER GbR

(56) Entgegenhaltungen:
- EP-A- 0 097 785
- DE-A- 3 016 313
- DE-A- 3 806 613
- DE-C- 3 437 094
- FR-A- 2 451 517

## Beschreibung

Die Erfindung betrifft einen Linearantrieb mit einem entlang einer Linearführung verschiebbaren Schlitten, einem entlang der Linearführung gespannten Zahnriemen, der eine Seele aus Stahl aufweist, einem antreibbaren Zahnriemenrad auf dem Schlitten, wenigstens je einer Andruckrolle auf beiden Seiten vor und hinter dem Zahnriemenrad, bezogen auf die Bewegungsrichtung, die den Zahnriemen einerseits gegen den Umfang des Zahnriemenrades drücken und andererseits in seiner gestreckten Ausgangsposition halten, und einer Anzahl von zwischen dem Zahnriemen und der den Linearantrieb tragenden Grundfläche in Bewegungsrichtung verstellbaren, festsetzbaren Zahnplatten, die jeweils wenigstens einen vorspringenden Zahn aufweisen, der mit den Zähnen des Zahnriemens in Eingriff tritt.

Die EP 97785 A beschreibt einen Linearantrieb gemäß dem Oberbegriff des Anspruchs 1. Bei derartigen Linearantrieben läuft ein Zahnriemen, der an seinen beiden Enden eingespannt ist, um ein Zahnriemenrad am Schlitten herum, so daß der Schlitten durch Drehung des Zahnriemenrades entlang dem Zahnriemen bewegt werden kann. Zur Vermeidung einer bei Belastung des Zahnriemens auftretenden Dehnung des Zahnriemens und einer damit verbundenen Positionierungenauigkeit des Schlittens sind zwischen dem Zahnriemen und der den Linearantrieb tragenden Grundfläche eine Anzahl von in Bewegungsrichtung verstellbaren Zahnplatten angeordnet, die jeweils wenigstens einen vorspringenden Zahn aufweisen, der mit den Zähnen des Zahnriemens in Eingriff tritt.

Die Gefahr des Dehnens des Zahnriemens besteht auf diese Weise zwar bei Bewegungsstrecken auf waagerechten oder im wesentlichen waagerechten Oberflächen nicht mehr, da der Zahnriemen durch die Schwerkraft mit den Zahnplatten in Eingriff gehalten wird. Bei anderen Bewegungsstrecken, wie etwa auf senkrechten oder im wesentlichen senkrechten Flächen, insbesondere waagerechten Bahnstrecken auf senkrechten Flächen, kann sich der Zahnriemen jedoch von den Zahnplatten losen.

Der Erfindung liegt daher die Aufgabe zugrunde, einen Linearantrieb der eingangs genannten Art zu schaffen, der eine störungsfreie Arbeitsweise gewährleistet und eine genaue Steuerung des Schlittens unabhängig von der Anordnung der Bewegungsstrecke ermöglicht.

Diese Aufgabe wird erfindungsgemäß bei einem Linearantrieb der eingangs genannten Art dadurch gelöst, daß an den oder eingebettet in die Zahnplatten Magneten angeordnet sind.

Auf diese Weise wird gewährleistet, daß der Zahnriemen unabhängig von der Schwerkraft und damit von der Anordnung der Bewegungsstrecke stets gegen die Zahnplatten gezogen wird, so daß eine Dehnung des Zahnriemens vermieden wird. Die aus der Dehnung des Zahnriemens resultierende Positionierungenauigkeit des Schlittens des Linearantriebs wird entsprechend auf ein Minimum reduziert.

Vorzugsweise liegen die einzelnen Zahnplatten in einer unterhalb der Bahn des Zahnriemens verlaufenden Nut, in der sie nach Bedarf festgeklemmt werden können. Die Verstellbarkeit der Zahnplatten hat den Vorteil, daß sie im Einzelfall entsprechend der von der zu erwartenden Last abhängigen Vorspannung und damit Dehnung des Zahnriemens angeordnet werden können. Es ist selbstverständlich auch möglich, die Dichte der Anordnung der einzelnen Zahnplatten zu variieren, jedoch sollte der Zwischenraum zwischen den zwei äußeren Zähnen zwei benachbarter Zahnplatten, abgesehen von Fällen geringer Belastung, in der Regel nicht größer sein als der Achsabstand zwischen den beiden Andruckrollen, damit stets gewährleistet ist, daß sich wenigstens eine Andruckrolle im Bereich von Zähnen einer Zahnplatte befindet und den Zahnriemen hier entsprechend andrückt.

Vorzugsweise sind die an den oder eingebettet in die Zahnplatten angeordneten Magneten Dauermagneten.

Im folgenden werden bevorzugte Ausführungsbeispiele der Erfindung anhand der beigefügten Zeichnung näher erläutert.
- Fig. 1: ist eine teilweise geschnittene Seitenansicht eines erfindungsgemäßen Linearantriebs mit Schlitten und Zahnriemen;
- Fig. 2: ist eine vergrößerte Darstellung des mittleren Bereichs in Fig. 1;
- Fig. 3: entspricht Fig. 2, zeigt jedoch den Schlitten in einer anderen Position in bezug auf die Zahnplatten; und
- Fig. 4: zeigt einen senkrechten Schnitt quer durch die Bahn der Linearbewegung mit einigen Teilen in Seitenansicht.

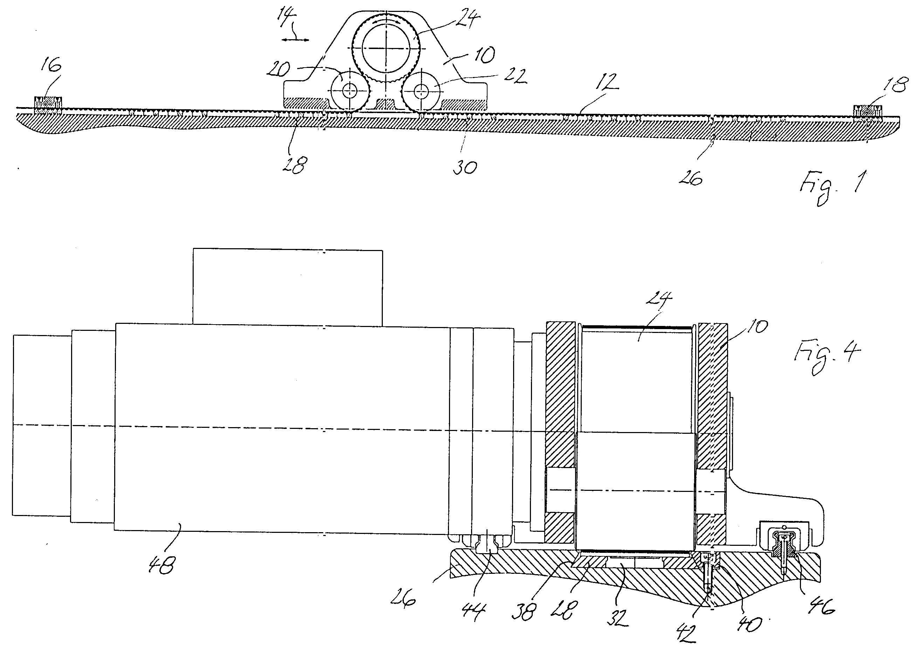

Anschließend soll eine Ausführungsform der Erfindung anhand von Fig. 1 bis 4 erläutert werden.

In der Gesamtdarstellung der Fig. 1 ist ein Schlitten mit 10 und ein Zahnriemen mit 12 bezeichnet. Der Schlitten 10 bewegt sich auf einer in Fig. 1 nicht dargestellten Linearführung entsprechend dem Doppelpfeil 14 nach links und rechts in Fig. 1. Der Zahnriemen 12 ist mit nach unten in Fig. 1 gerichteten Zähnen an seinen beiden Enden in Klötzen 16 und 18 verklemmt. Dies geschieht in der Regel mit einer gewissen Vorspannung, die je nach zu erwartender Belastung zu Dehnungen im Bereich einiger ‰ führt. Der Zahnriemen 12 wird im Bereich des Schlittens 10 zwischen zwei Andruckrollen 20,22 um ein Zahnriemenrad 24 herumgeführt, daß durch einen in Fig. 1 nicht gezeigten Antriebsmotor drehbar ist. Es ist erkennbar, daß sich bei Drehung des Zahnriemenrades 24 der Schlitten 10 nach links und rechts in Fig. 1 bewegt.

Begriffe wie "unten" und "oben" beziehen sich im vorliegenden Zusammenhang auf die Zeichnung, in der davon ausgegangen wird, daß der Linearantrieb auf einer waagerechten Fläche läuft. Von besonderer Bedeutung ist die vorliegende Erfindung jedoch für Linearantriebe, die auf einer geneigten oder senkrechten Fläche laufen. Insbesondere in den Fällen, in denen ein Linearantrieb auf einer senkrechten Fläche in waagerechter Richtung läuft, besteht die Gefahr, daß der Zahnriemen zumindest auf der lastfreien Seite gegenüber der Bewegungsstrecke herabhängt oder sich sogar verdreht. Diese Gefahr wird umso größer, je länger der Zahnriemen und je größer dessen Dehnung auf der Lastseite ist. Die Vorteile der vorliegenden Erfindung kommen daher insbesondere zur Geltung bei Linearantrieben, die gegenüber der Darstellung der Fig. 1 eine wesentlich größere Länge haben können.

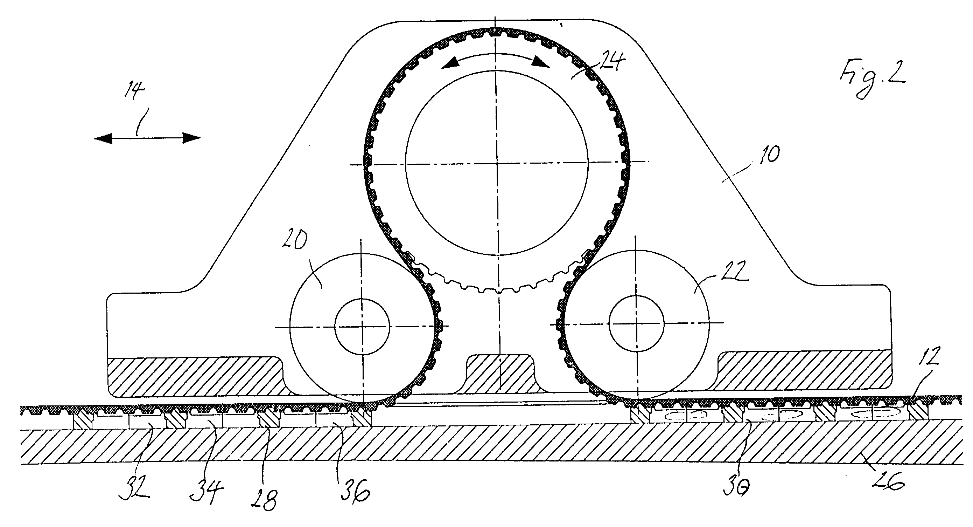

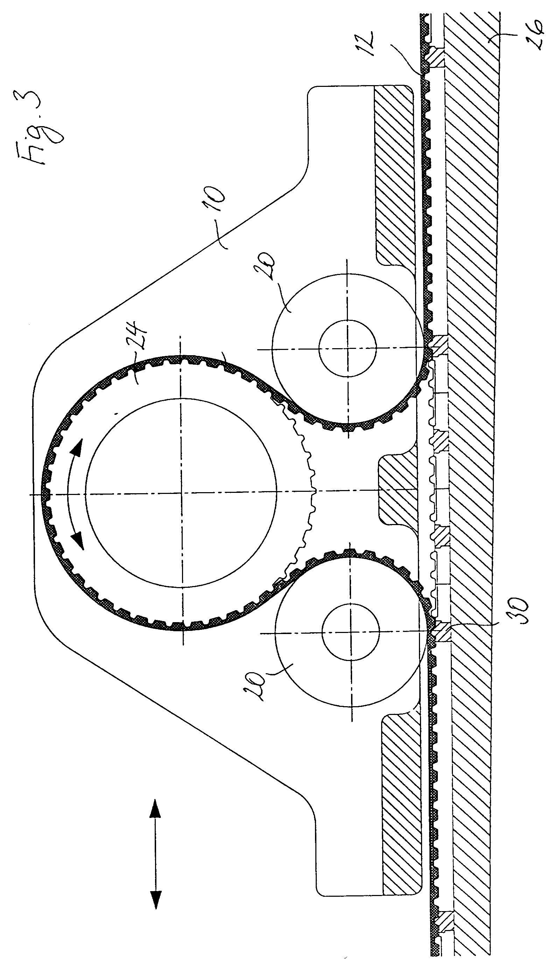

Es ist erkennbar, daß zwischen dem Zahnriemen 12 und einer den gesamten Linearantrieb aufnehmenden Grundfläche 26, die beispielsweise ein Maschinenbett oder eine Seitenwand eines Maschinengehäuses sein kann, eine Anzahl von Zahnplatten 28,30 vorgesehen ist, deren Zähne mit den Zähnen des Zahnriemens 12 in Eingriff stehen. Dieser Zusammenhang wird insbesondere in Fig. 2 und 3 erkennbar.

In Fig. 2 sind u.a. die beiden aufeinander folgenden, in Abstand zueinander liegenden Zahnplatten 28 und 30 gezeigt. Wie am Beispiel der Zahnplatte 28 erkennbar ist, sind in nicht bezeichnete Ausnehmungen der Zahnplatte 28 Dauermagneten 32,34,36 eingelegt, die dazu dienen, den Zahnriemen 12 anzuziehen, dessen Seele aus ferromagnetischem Stahl besteht. Die Anordnung der Dauermagneten innerhalb der Zahnplatte 28 ist im übrigen auch in Fig. 4 erkennbar, auf die später näher eingegangen wird.

Fig. 2 zeigt im übrigen einige nach oben vorspringende Zähne der Zahnplatte 28, deren Teilung größer sein kann als diejenige der Zähne des Zahnriemens 12. Gemäß Fig. 2 befinden sich die äußeren, einander zugewandten Zähne der Zahnplatten 28 und 30 in den Positionen der Andruckrollen 20,22, so daß hier ein fester Eingriff zwischen den Zähnen und dem Zahnriemen 12 hergestellt wird. Betrachtet man zum Vergleich Fig. 3, so wird erkennbar, daß dort die beiden Andruckrollen 20,22 jeweils über den äußeren Zähnen ein und derselben Zahnplatte 30 stehen. Größenverhältnisse der hier geschilderten Art werden als vorteilhaft angesehen. Die einzelnen Zahnplatten können jedoch auch länger sein als der Abstand der Achsen der beiden Andruckrollen 20,22, und ggfs. können auch die Abstände zwischen den Zahnplatten größer sein.

In Fig. 4 ist zusätzlich erkennbar, daß die Zahnplatten 28 mit den Dauermagneten 32 in einer Nut 38 liegen. Die Zahnplatten 28 haben einen trapezförmigen Querschnitt, erweitern sich also nach unten in Fig. 4, und die Nut 38 ist in ihrem Querschnitt gemäß Fig. 4 auf der linken Seite entsprechend schräg hinterschnitten, während auf der rechten Seite Klemmstücke 40 vorgesehen sind, die mit Hilfe von Schrauben 42 gegen den Grund der Nut 38 gezogen werden können. Auf diese Weise können die Zahnplatten 28 in der Nut in beliebigen Positionen festgeklemmt werden.

Der Schlitten 10 läuft auf zwei parallelen Führungsschienen 44,46 beiderseits der Position der Zahnplatten. Die Führungsschienen 44,46 sind im dargestellten Beispiel mit der Grundfläche 26 verschraubt. Koaxial zu dem Zahnriemenrad 24 ist an dem Schlitten 30 ein Getriebemotor 48 befestigt, der eine hin- und hergehende Drehung des Zahnriemenrades 24 ermöglicht.

## Patentansprüche

1. Linearantrieb mit einem entlang einer Linearführung (44,46) verschiebbaren Schlitten (10), einem entlang der Linearführung gespannten Zahnriemen (12), der eine Seele aus Stahl aufweist, einem antreibbaren Zahnriemenrad (24) auf dem Schlitten, wenigstens je einer Andruckrolle (20,22) auf beiden Seiten vor und hinter dem Zahnriemenrad (24), bezogen auf die Bewegungsrichtung, die den Zahnriemen (12) einerseits gegen den Umfang des Zahnriemenrades (24) drücken und andererseits in seiner gestreckten Ausgangsposition halten, und einer Anzahl von zwischen dem Zahnriemen (12) und der den Linearantrieb tragenden Grundfläche (26) in Bewegungsrichtung verstellbaren, festsetzbaren Zahnplatten (28,30), die jeweils wenigstens einen vorspringenden Zahn aufweisen, der mit den Zähnen des Zahnriemens (12) in Eingriff tritt, dadurch **gekennzeichnet**, daß an den oder eingebettet in die Zahnplatten (28,30) Magneten (32,34,36) angeordnet sind.

2. Linearantrieb nach Anspruch 1, dadurch **gekennzeichnet**, daß die Zahnplatten (28,30) in einer unterhalb des Zahnriemens (12) verlaufenden Nut (38) festklemmbar sind.

3. Linearantrieb nach Anspruch 1 oder 2, dadurch **gekennzeichnet**, daß die Magneten (32,34,36) Dauermagneten sind.

4. Linearantrieb nach einem der vorhergehenden Ansprüche, dadurch **gekennzeichnet**, daß die Zwischenräume zwischen zwei aufeinander folgenden Zahnplatten (28,30) nicht größer als der Achsabstand der Andruckrollen (20,22) ist.

## Claims

1. Linear drive with a slide (10) which can move along a linear guide (44, 46), a toothed belt (12) which is tensioned along the linear guide and comprises a steel core, a driveable toothed belt wheel (24) on the slide, at least one pressure roller (20, 22) on each side in front of and behind the toothed belt wheel (24), relative to the direction of movement, which on the one hand urge the toothed belt (12) against the periphery of the toothed belt wheel (24) and on the other hold it in its stretched initial position, and with a plurality of tooth plates (28, 30) which can be secured and adjusted in the direction of movement between the toothed belt (12) and the base surface (26) bearing the linear drive, the tooth plates (28, 30) each comprising at least one projecting tooth which meshes with the teeth on the toothed belt (12), characterized in that magnets (32, 34, 36) are disposed on or embedded in the tooth plates (28, 30).

2. Linear drive according to Claim 1, characterized in that the tooth plates (28, 30) can be securely clamped in a groove (38) extending below the toothed belt (12).

3. Linear drive according to either of Claims 1 and 2, characterized in that the magnets (32, 34, 36) are permanent magnets.

4. Linear drive according to any one of the preceding claims, characterized in that the spaces between two successive tooth plates (28, 30) are not larger than the axial spacing between the pressure rollers (20, 22).

## Revendications

1. Entraînement linéaire comprenant un chariot (10) pouvant coulisser le long d'un moyen de guidage linéaire (44, 46), une courroie dentée (12) pourvue d'une âme en acier et tendue le long du moyen de guidage linéaire, une roue menée à courroie dentée (24) montée sur le chariot, au moins un galet d'appui (20, 22) qui est disposé sur chacun des côtés situés avant et après la roue à courroie dentée (24) par rapport au sens de déplacement et qui, d'une part, plaque la courroie dentée (12) contre le pourtour de la roue à courroie dentée (24) et, d'autre part, la maintient en position initiale étirée, et une pluralité de plaques dentées (28, 30) qui peuvent être immobilisées et réglées dans le sens de déplacement entre la courroie dentée (12) et la surface de base (26) portant l'entraînement linéaire et qui comportent chacune au moins une dent en saillie qui est en prise avec les dents de la courroie dentée (12), caractérisé en ce qu'il est prévu des aimants (32, 34, 36) qui sont accolés aux plaques dentées (28, 30) ou y sont encastrés.

2. Entraînement linéaire selon la revendication 1, caractérisé en ce que les plaques dentées (28, 30) peuvent être immobilisées par serrage dans une gorge (38) s'étendant sous la courroie dentée (12).

3. Entraînement linéaire selon la revendication 1 ou 2, caractérisé en ce que les aimants (32, 34, 36) sont des aimants permanents.

4. Entraînement linéaire selon une des revendications précédentes, caractérisé en ce que les intervalles entre deux plaques dentées successives (28, 30) ne sont pas supérieurs à la distance entre les axes des galets d'appui (20, 22).
